# EUROPEAN PATENT APPLICATION

(11) **EP 2 312 845 A1**
(43) Date of publication of application: **20.04.2011**
(21) Application number: 09800291.8
(22) Date of filing: 23.06.2009
(51) Int. Cl.: H04N 7/173, G09G 5/00, G09G 5/12, A63F 13/10

(54) **ADDITIONAL DATA GENERATING SYSTEM**

(30) Priority: 25.07.2008 JP 2008192453
(71) Applicant: Sharp Kabushiki Kaisha, Osaka-shi, Osaka 545-8522 (JP)
(72) Inventor: AOKI, Nobuaki, Osaka 545-8522 (JP); HATA, Toshio, Osaka 545-8522 (JP); OKAZAKI, Jun, Osaka 545-8522 (JP); YOKOTA, Shoji, Osaka 545-8522 (JP); MIYATA, Masataka, Osaka 545-8522 (JP)
(74) Representative: Treeby, Philip David William
(86) International application number: PCT/JP2009/061390
(87) International publication number: WO 2010/010776

(57) **Abstract**

An additional data generation system is provided which can produce an output based on additional data to impart an information conveying effect to an output based on output data. The additional data generation system includes a source unit 1 configured to supply an output signal, an operation control unit 4 configured to obtain output data from the output signal, a first output unit 5 configured to produce an output based on the output data, an additional data generator 3 configured to generate additional data which emphasizes a feature of the output from the first output unit, a second output unit 6 configured to produce an output based on the additional data, and an operation unit 2 configured to output, to the operation control unit, an operation signal which is used to change the output data.

## Description

### Technical Field

The present invention relates to systems for generating additional data which imparts an information conveying effect to an output which is based on output data, such as image data and/or audio data, or the like.

### Background Art

In recent years, as televisions (TVs) have acquired higher definition and higher performance, reality has been becoming the next target that should be achieved by TVs and peripheral systems even at home. On the other hand, communication networks have been developed to distribute bidirectional TV broadcasting, emergency alert information during disasters, and the like.

The higher definition and the higher performance have also lead to advances in game devices used at home, particularly, more complicated or elaborate movements in images or images themselves which are displayed on the screen of the game device. As a result, the game devices have evolved their controllers (operating means) so that the user can enter a variety of motions.

Recording media for movies are being changed from digital versatile discs (DVDs) to Blu-ray discs (BDs), on which higher-definition and higher-quality video and audio data can be recorded.

The aforementioned trends and advances or the like have induced a demand for an enhancement of the sense of realism when TVs or game devices are used.

As a conventional example auxiliary system for enhancing the sense of realism, JP 2000-173783 A describes a lighting device. The lighting device controls brightnesses and colors of a plurality of lights provided in a space where an image display device is provided, to appropriate values for respective positions of the lights separately (an effective visual field, an induced visual field, or an auxiliary visual field), which are estimated based on the screen of the image display device. As a result, the sense of realism for images displayed on the screen of the image display device is enhanced.

As another conventional example of the auxiliary system, JP 2007-25111 A describes an image presentation system.

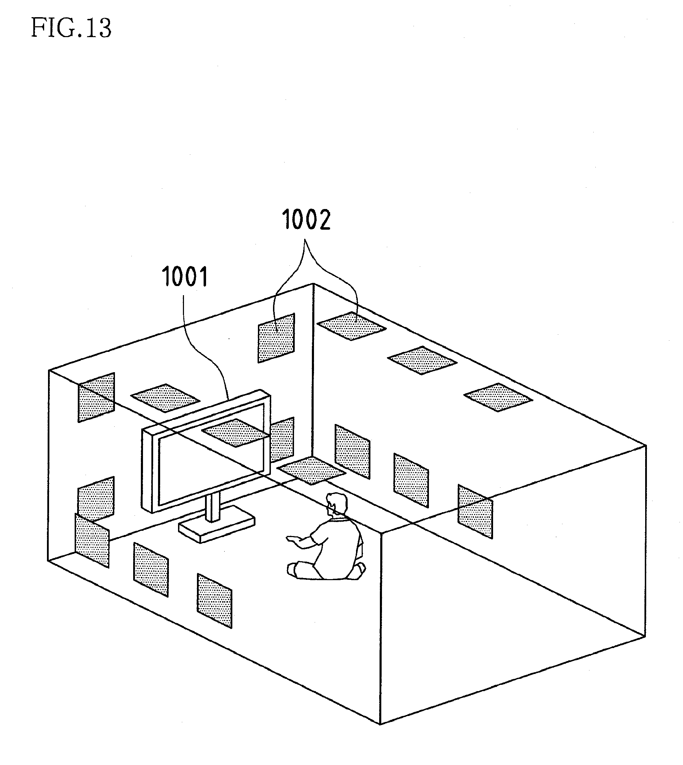

FIG. 13 is a diagram for describing an example of the conventional image presentation system.

The image presentation system acquires, during shooting, main video which is to be presented in the effective visual field, and information about images around the main image, and reproduces the acquired video using a display means 1001 for presenting an effective visual field video and a display means 1002 for presenting video of a surrounding area or ambient lighting. As a result, the user can view the video of the effective visual field with a sense of realism close to actual conditions.

As another example of the auxiliary system, JP 2005-531908A (Tokuhyo) describes a lighting unit.

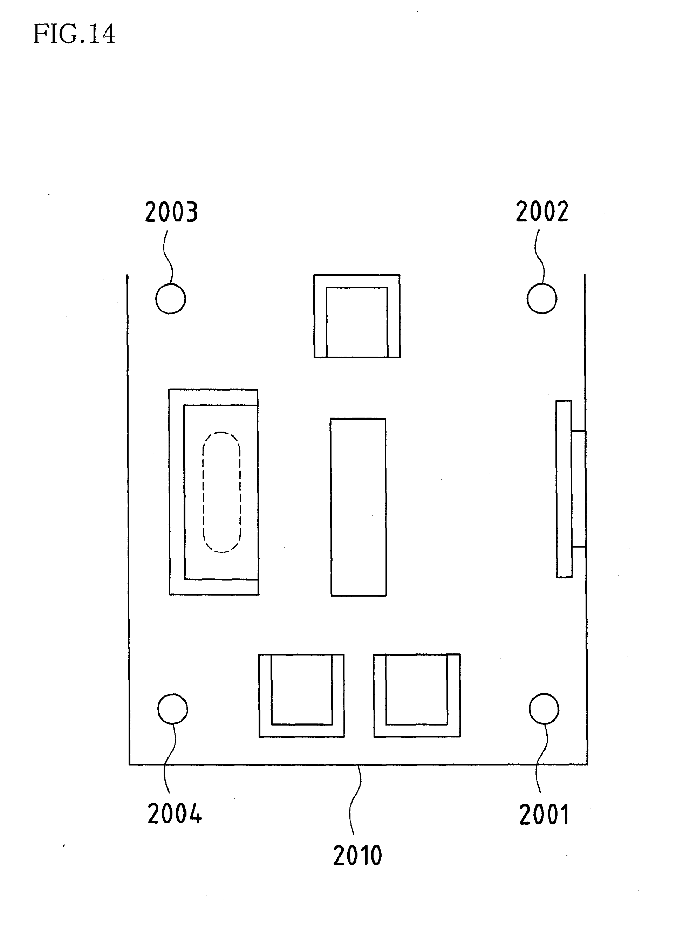

FIG. 14 is a diagram for describing an example of the conventional lighting unit.

The lighting unit includes a plurality of lighting elements 2001-2004 which are provided in a space (living room) 2010 where a display device which displays an image based on a video signal is provided. Based on the video signal, the lighting unit analyzes an average color or a noticeable color of image frames or a color at a corner of an image frame, or analyzes an object in each video frame (in particular, when the object is a face, its facial expression is also analyzed), to set light beams of the lighting elements 2001-2004, thereby improving an environment around a viewer.

A conventional example product including the auxiliary system is Ambilight (lighting system manufactured by Koninklijke Philips Electronics N.V.). Ambilight is a system that analyzes color information of video displayed on a screen, and indirectly illuminates a room with the color tone. For example, when Ambilight is incorporated into a flat TV, such as a liquid crystal TV or the like, an RGB LED (a light emitting diode including a red light emitting diode, a green light emitting diode, and a blue light emitting diode) is provided as a lighting device on the back surface of the screen at each of upper, lower, left, and right edge portions thereof so that the color tones of the LEDs are in conformity with a representative color of an image, thereby enhancing the sense of realism. Specifically, when a sunset scene is displayed on the screen, the color tones of the LEDs are adjusted to an orange color, and when a verdure scene is displayed, the color tones of the LEDs are adjusted to a green color.

### Prior Art Document

### Patent Document

Patent Document 1: JP 2000-173783A
Patent Document 2: JP 2007-25111A
Patent Document 3: JP 2005-531908T

### Disclosure of Invention

### Problem to be Solved by the Invention

According to the lighting device of JP 2000-173783 A and Ambilight, however, the brightnesses and chromaticities of lights provided in a viewing space or an effective visual field (a visual field within the range of about ±15° with reference to the front direction) are controlled based on an average chromaticity and an average brightness or a representative color of the entire screen. Therefore, original video information data is not directly used, and therefore, the details of video displayed on the screen, the color tones of edge portions of the screen, and the like are not reflected. As a result, effective lighting for enhancing the sense of realism cannot be presented.

For example, when a scene of traveling through a dark tunnel is displayed, the lights provided in the viewing space or the effective visual field are adjusted to a bright color tone, such as white or the like, before exiting of the tunnel. As a result, a color difference occurs between a black color displayed at edge portions of the screen and the white color illuminating a surrounding area of the screen. Moreover, because it is necessary to generate a signal for controlling lighting based on the average chromaticity and the average brightness or the representative color of the entire screen, a delay may occur between the displaying of the screen and the control of the lighting.

According to the lighting unit of JP 2005-531908T, by analyzing a video signal, a color, a flickering pattern, or the like of lighting is controlled based on an average color or a most noticeable color of image frames, a color of a corner of an image frame, or an object in an image frame. As a result, lighting cannot be in conformity with a displayed detail of the screen.

The image presentation system of JP 2007-25111A solves the above problem. When capturing video of the effective visual field, a video information data generator simultaneously acquires information, such as panorama image data or the like, which is required for generation of video of a surrounding area or ambient light. A video information data reproducer presents video or light to a peripheral visual field (visual field outside the range of about ±15° with reference to the front direction) in addition to the effective visual field. Therefore, the image presentation system disadvantageously needs to include a means (omnidirectional camera) for acquiring information, such as panorama image data or the like, in the video information data generator.

The present invention has been made to solve the above problems. It is an object of the present invention to generate additional data which emphasizes a feature of an output based on output data, such as image data and/or audio data or the like, when the output is produced, and produce an output based on the additional data to impart an information conveying effect to the output based on the output data.

### Means for Solving Problem

To achieve the object, the additional data generation system of the present invention includes a source unit configured to supply an output signal, an operation control unit configured to obtain output data from the output signal, a first output unit configured to produce an output based on the output data, an additional data generator configured to generate additional data which emphasizes a feature of the output from the first output unit, a second output unit configured to produce an output based on the additional data, and an operation unit configured to output, to the operation control unit, an operation signal which is used to change the output data.

As a result, the output of the second output unit can be used to impart an information conveying effect to the output of the first output unit.

The additional data generator may analyze the output data to generate the additional data. Specifically, for example, the additional data generator may analyze the output data output by the operation control unit to generate the additional data.

The additional data generator may be provided in the operation control unit. In this case, the additional data generator may analyze the output data obtained by the operation control unit to generate the additional data.

The additional data generation system of the present invention may further include a detector configured to monitor the output of the first output unit. The additional data generator may generate the additional data based on a result of the detection by the detector.

The second output unit may include a plurality of lighting devices provided around a peripheral portion of a region in which the output of the first output unit is viewed.

In this case, a surround effect is obtained based on an output of the second output unit, thereby enhancing the sense of realism.

The lighting devices may each include at least one of a red light emitting diode cell, a green light emitting diode cell, and a blue light emitting diode cell, and may be light emitting diode lighting devices configured to output light beams having different color temperatures.

In this case, light sources having a plurality of color temperatures can be used to output light beams having various colors in addition to a single white color. Moreover, since LEDs are used, the lighting devices can have low power consumption and a long life.

The lighting devices may each be at least one of a ceiling light, a pendant light, a bracket light, a downlight, a spotlight, a projector, a hologram, and a laser drawing device.

In this case, various types of lighting devices can be used to control output light, thereby providing an increased sense of realism.

The source unit may be a communication terminal device configured to be capable of receiving information distributed via a communication network from a television station, an image distributor, or a music distributor, or a reader configured to read a program and data for performing an operation control of an electronic device from a storage medium storing the program and the data.

In this case, various contents can be played (viewed) with an increased sense of realism.

The additional data generator may change the additional data in conformity with a change in the output data.

In this case, a change in an output based on the additional data is synchronous with or follows a change in an image or sound which is an output from the first output unit, whereby an increased sense of realism can be achieved.

The operation unit may be: a controller or a remote controller for a TV, a VCR, a CD player, a DVD player, a BD player, a PC, a game device, or an amusement device; a sensor or an item for monitoring physical information of an operator; or an operator detection sensor included in a receiver for a wireless emergency alert system.

In this case, the output data can be easily changed.

The operation unit may output, to the operation control unit, the operation signal which is used to change the output data, and the operation control unit may change the output signal based on the operation signal. Alternatively, the operation unit may output, to the source unit, the operation signal which is used to change the output data, and the source unit may change the output signal based on the operation signal.

When the operation signal is output to the operation control unit, the form, operation method, and the like of the operation unit can be separately changed irrespective of the form or arrangement of the source unit. Therefore, various types and forms of operation units can be provided. On the other hand, when the operation signal is output to the source unit, the output data can be reliably changed.

The output data may include image data, and the additional data may be generated based on at least one of a brightness of an image, a color included in the image, and an object included in the image, which are features extracted from the image data.

In this case, the additional data can be generated based on detailed information obtained from the output data, whereby the sense of realism can be more reliably enhanced.

The output data may include image data, the first output unit may include a display screen configured to display an image based on the image data, and the detector may include an image monitoring camera configured to monitor the display screen.

In this case, the additional data can be generated based on detailed information obtained from the output, resulting in the additional data generation system having more various forms.

The second output unit may include a lighting device provided at an edge portion of the display screen.

In this case, because the lighting device is provided at a position close to an image displayed on the display screen provided in an effective visual field, the output of the lighting device is allowed to easily enter the eyes of a listener or viewer (operator), and there is a continuity between the image displayed on the display screen and the output of the lighting device. As a result, an increased sense of realism can be achieved.

The second output unit may further include a lighting device provided in the vicinity of the display screen, and the lighting device provided at the edge portion of the display screen and the lighting device provided in the vicinity of the display screen may produce an output without discontinuity with respect to an image displayed on the display screen.

In this case, there is a continuity between the image displayed on the display screen and the output of the lighting device, whereby an increased sense of realism can be achieved.

The additional data may include audio data, and the second output unit may include a surround loudspeaker system configured to produce an output based on the audio data. Note that the surround loudspeaker system may include two surround loudspeakers provided at positions which allow the two surround loudspeakers to face each other with the first output unit being interposed therebetween, two surround loudspeakers provided at positions which allow the two surround loudspeakers to face each other with a region where the output of the first output unit is viewed being interposed therebetween, two front loudspeakers provided in the vicinity of left- and right-hand sides of the first output unit as viewed from the region where the output of the first output unit is viewed, a center loudspeaker provided between the region where the output of the first output unit is viewed and the first output unit, and a subwoofer provided in the vicinity of the first output unit.

In this case, sound output from the surround loudspeaker system can surround a listener or viewer more effectively, whereby an increased sense of realism can be achieved.

The second output unit may include four lighting devices along with the surround loudspeakers.

In this case, light output from the lighting device can surround a listener or viewer more effectively, whereby an increased sense of realism can be achieved.

At least one of the plurality of lighting devices provided around a peripheral portion of the region where the output of the first output unit is viewed may be adjustable in at least one of the intensity and chromaticity of output light.

The lighting devices may be adjustable in at least one of the intensity and chromaticity of output light.

In this case, the intensities of light beams having various colors can be controlled and output, depending on the environment in which the additional data generation system is provided. Therefore, the colors of light beams output from the lighting devices can be combined to affect the health condition of the operator or the atmosphere of the environment.

The second output unit may include at least one of a loudspeaker, a vibrator, and a display device provided in the operation unit.

In this case, sound, vibration, an image, light, or the like can be output near the hand of the operator. Therefore, a sense of a change in the output based on the additional data, depending on an operation of the operation unit, is further emphasized, whereby an increased sense of realism can be achieved.

The second output unit may include an air conditioner configured to perform air conditioning with respect to the region where the output of the first output unit is viewed.

In this case, an increased sense of realism can be achieved.

At least a portion of the additional data may be changed based on a result of detection by the sensor or item for monitoring the physical information or the operator detection sensor. Note that the sensor for monitoring the physical information may be provided in the operation unit.

In this case, the output of the second output unit, such as an image, sound, light, or the like, can be controlled in view of the physical condition or health condition of the operator. Moreover, the physical information of the operation may be fed back to control the output of the second output unit, such as an image, sound, light, or the like, whereby the sense of realism can be more safely enhanced.

At least one of the loudspeaker, the vibrator, and the display device may also serve as the operation unit.

In this case, the operation can be further simplified, and useless power consumption is reduced, resulting in an environmentally friendly form.

At least a portion of the additional data is changed in synchronization with a change in the output data.

In this case, a sense of a change in the output based on the additional data, depending on an operation of the operation unit, is further emphasized, whereby an increased sense of realism can be achieved.

### Effects of the Invention

According to the present invention thus configured, an information conveying effect can be imparted to the output based on the output data. As a result, the sense of realism can be enhanced when an image, sound, or the like is output. The level of amusement of an amusement device can be enhanced. A sense-of-realism improving system which places primary importance on health can be obtained. The operation can be further simplified, and useless power consumption is reduced, resulting in an environmentally friendly form. Information can be quickly and reliably conveyed during emergencies.

### Brief Description of Drawings

[FIG. 1] FIG. 1 is a diagram for describing Embodiment 1 of an additional data generation system according to the present invention.
[FIG. 2] FIG. 2 is a diagram for describing a variation of Embodiment 1 of the additional data generation system of the present invention.
[FIG. 3] FIG. 3 is a diagram for describing Embodiment 2 of the additional data generation system of the present invention.
[FIG. 4] FIG. 4 is a diagram for describing an example living room in which Example 1 of the additional data generation system of the present invention is provided.
[FIG. 5] FIG. 5 is a diagram for describing an example game device included in the additional data generation system of FIG. 4.
[FIG. 6] FIG. 6 is a diagram for describing Example 2 of the additional data generation system of the present invention, showing only the display screen of a TV and a lighting device provided around the display screen.
[FIG. 7] FIG. 7 is a diagram for describing an example living room in which Example 3 of the additional data generation system of the present invention is provided.
[FIG. 8] FIG. 8 is a diagram for describing an example living room in which Example 4 of the additional data generation system of the present invention is provided.
[FIG. 9] FIG. 9 is a diagram for describing an example living room in which Variation 1 of Example 4 of the additional data generation system of the present invention is provided.
[FIG. 10] FIG. 10 is a diagram for describing an example living room in which Variation 2 of Example 4 of the additional data generation system of the present invention is provided.
[FIG. 11] FIG. 11 is a diagram for describing an amusement device which is implemented as Example 5 of the additional data generation system of the present invention.
[FIG. 12] FIG. 12 is a diagram for describing an example in which an operator sensor is added to the additional data generation system of FIG. 1.
[FIG. 13] FIG. 13 is a diagram for describing an example conventional image presentation system.
[FIG. 14] FIG. 14 is a diagram for describing an example conventional lighting unit.

### Description of the Invention

Embodiments of an additional data generation system according to the present invention will be described hereinafter.

### <Embodiment 1>

Firstly, Embodiment 1 of the additional data generation system of the present invention will be described with reference to the drawings.

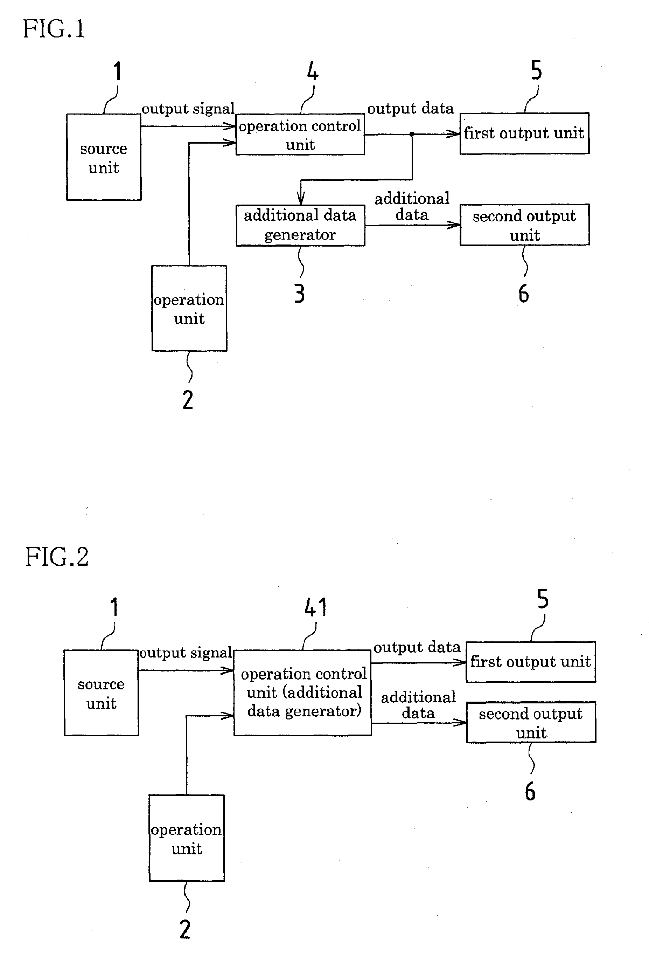

FIG. 1 is a diagram for describing Embodiment 1 of the additional data generation system of the present invention.

The additional data generation system of this embodiment includes a source unit 1 which supplies an output signal, an operation unit 2 which is operated by an operator, an operation control unit 4 which receives the output signal, and obtains, from the received output signal, output data based on an operation performed using the operation unit 2, an additional data generator 3 which analyzes the output data to generate additional data which is used to emphasize a feature of the output data (i.e., a feature of an output from a first output unit 5 described below), the first output unit 5 which performs an output operation based on the output data, and a second output unit 6 which performs an output operation based on the additional data.

### <Variation of Embodiment 1>

Although, in Embodiment 1, the additional data generator 3 analyzes the output signal to generate the additional data, the additional data generation system of the present invention is not limited to this. For example, an output signal which previously contains an additional signal indicating the additional data may be output from the source unit. In this variation, a case where the additional signal is contained in the output signal will be described.

FIG. 2 is a diagram for describing the variation of Embodiment 1 of the additional data generation system of the present invention.

The additional data generation system of FIG. 2 is different from that of FIG. 1 in that an operation control unit 41 serves as the operation control unit 4 and the additional data generator 3 of FIG. 1. Specifically, in the additional data generation system of FIG. 2, the operation control unit 41 analyzes the output data to generate additional data which is used to emphasize a feature of the output data, and converts the additional data to a level which can be handled by the second output unit 6 before outputting the additional data to the second output unit 6. Note that a procedure of the operation control unit 41 for obtaining the output data from the output signal and outputting the output data to the first output unit 5 is similar to that of the additional data generation system of FIG. 1 and will not be described in greater detail.

### <Embodiment 2>

Next, Embodiment 2 of the additional data generation system of the present invention will be described with reference to the drawings.

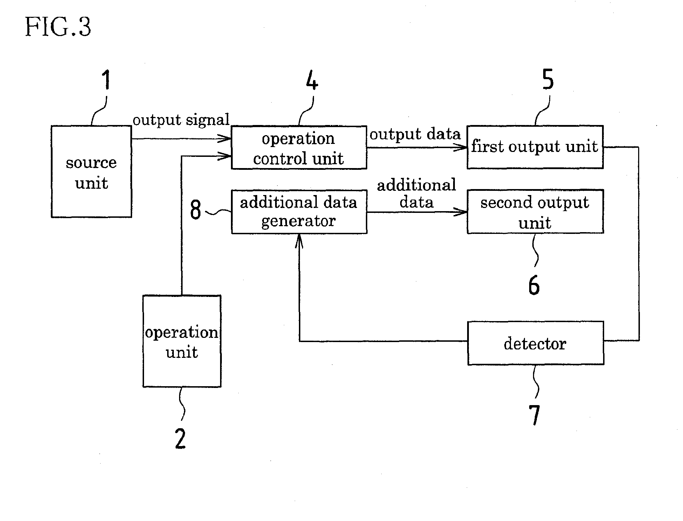

FIG. 3 is a diagram for describing Embodiment 2 of the additional data generation system of the present invention.

The additional data generation system of this embodiment includes a source unit 1 which transmits an output signal, an operation unit 2 which is operated by an operator, an operation control unit 4 which receives the output signal, and obtains, from the received output signal, output data based on an operation performed using the operation unit 2, a first output unit 5 which performs an output operation based on the output data, a detector 7 which monitors an output of the first output unit 5, an additional data generator 8 which generates, based on the result of detection by the detector 7, additional data which is used to emphasize a feature of an output of the first output unit 5, and a second output unit 6 which performs an output operation based on the additional data.

The detector 7 is, for example, an image color detection system in which a chromaticity measuring device is embedded in an end portion of the screen to detect an average color of the screen.

Although, in Embodiments 1 and 2, the additional data generator 3 or 8 and the operation control unit 4 are separately provided in the additional data generation system of FIG. 1 or 3, the additional data generator 3 or 8 may be provided in the operation control unit 4.

The source unit 1 is, for example, a communication terminal device (e.g., an optical communication terminal device) which can receive information distributed via a communication network from a television station, an image distributor, or a music distributor, or a reader which reads out a program (also referred to as "software") for controlling operations of a plurality of electronic devices and data from a storage medium storing the program and the data. Examples of the electronic devices include game devices, amusement devices (e.g., pachinko machines, slot machines, etc.), and receivers for wireless emergency alert systems. Examples of the storage medium include cassettes for video cassette recorders (VCRs), compact discs (CDs), digital versatile discs (DVDs), BDs, recording media for game devices, recording media for personal computers (PCs), and the like.

The operation unit 2 is operated to specify an operation of the electronic device or the like. Examples of the operation unit 2 include remote controllers for TVs, VCRs, CD players, DVD players, BD players, PCs, or other electronic devices, controllers for game devices or the electronic devices, and sensors for monitoring information about the body. Note that an operation button or switch provided in an electronic device main body including the operation control unit 4 or 41 may be operated instead of the operation unit 2.

The additional data generator 3 of Embodiment 1 generates additional data from the output data. For example, the additional data generator 3 of Embodiment 1 analyzes the output data to extract a feature of the output (e.g., at least one of the brightness of an image, a color included in the image, an object included in the image, etc.), and based on the result of the extraction, generates the additional data. Alternatively, the additional data generator 3 of Embodiment 1 includes a storage unit which stores an operating program for executing a step of reading out additional data relating the extraction result from a storage means storing a plurality of pieces of additional data, and a signal processing unit which executes the operating program to execute the step.

On the other hand, the additional data generator 8 of Embodiment 2 generates additional data from the result of detection by the detector 7. For example, the additional data generator 8 of Embodiment 2 analyzes the detection result to extract a feature of the output (e.g., the brightness of an image, and a color and an object contained in the image, etc.), and based on the extraction result, generates additional data. Alternatively, the additional data generator 8 of Embodiment 2 includes a storage unit which stores an operating program for executing a step of reading out additional data relating the extraction result from a storage means storing a plurality of pieces of additional data, and a signal processing unit which executes the operating program to execute the step.

An example analysis method which is used when the additional data generator 3 or 8 analyzes the output data or the detection result, includes extracting, from image data, data corresponding to a background condition or a game scene, or extracting, from image data, data corresponding to an edge portion of the display screen, and comparing the result of the extraction with a criterion in the operating program to generate data for selecting one of lights to which a current is to be supplied and controlling the amount of the current.

Note that the additional data generators 3 and 8 convert the additional data to a level which can be handled by the second output unit 6 before outputting the additional data. The second output unit 6 performs an output operation based on the additional data to impart an information conveying effect to an output of the first output unit 5. The information conveying effect refers to an effect, such as, for example, an improvement in the sense of realism, backup for a health condition of an operator, quick and reliable conveyance of information, and the like. The information conveying effect will be described below in greater detail using a specific example.

The operation control unit 4 extracts only a signal relating to the output of the first output unit 5 from the output signal containing a plurality of signals, and converts the signal extracted from the output signal to a level which can be handled by the first output unit 5. The operation control unit 4 may include, for example, a detector circuit, an amplifier circuit, and the like. Specifically, the operation control unit 4 is a signal processing unit included in a TV, a VCR, a CD player, a DVD player, a BD player, a PC, a game device, a receiver for a wireless emergency alert system, or other electronic devices.

The first output unit 5 includes at least one of, for example, an image display unit, a loudspeaker, a vibrator, and an air conditioner. The image display unit, the loudspeaker, the vibrator, and the air conditioner are included in or connected to electronic devices. Examples of the electronic devices include TVs, VCRs, CD players, DVD players, BD players, PCs, game devices, and receivers for wireless emergency alert systems.

The second output unit 6 includes at least one of an image display unit, a loudspeaker, a lighting device, a vibrator, and an air conditioner. As the lighting device, any one of, for example, a ceiling light, a pendant light, a bracket light, a downlight, a spotlight, a projector, a hologram, and a laser drawing device can be used.

If the operation control unit 4 is a receiver unit of a TV, the TV receives an analog or digital television signal transmitted from a television station via a satellite broadcasting receiving antenna, a cable communication terminal device, the Internet, or the like, which serves as the source unit 1. Thereafter, the TV extracts a signal on a channel selected by an operation of a remote controller (the operation unit 2) from the received signal, and processes the extracted signal to generate image data and audio data. The TV also displays video on the screen based on the generated image data, and outputs audio from the loudspeaker based on the generated audio data.

The output data is data of an image or sound output from a TV, a VCR, a CD player, a DVD player, a BD player, a PC, a game device, a receiver for a wireless emergency alert system, or an image display unit and/or a loudspeaker included in other electronic devices, or data for controlling an operation of a vibrator or an air conditioner.

The additional data generation systems of Embodiments 1 and 2 have the above configurations, and therefore, can use an output of the second output unit to impart an information conveying effect to an output of the first output unit. Moreover, according to the additional data generation system of the variation of Embodiment 1, the configuration of the additional data generation system can be simplified. Moreover, the output of the second output unit 6 can be synchronized with the output of the first output unit 5 to prevent a delay.

Next, examples of the additional data generation system of the present invention will be described.

### <Example 1>

Firstly, Example 1 of the additional data generation system of the present invention will be described with reference to the drawings. Note that this example is for more specifically describing the additional data generation system of Embodiment 1 shown in FIG. 1.

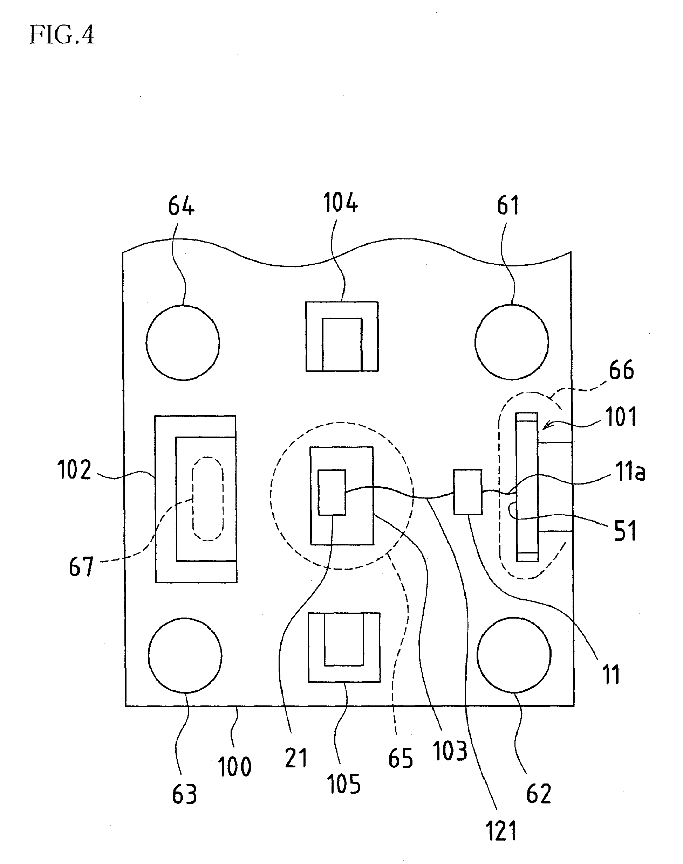

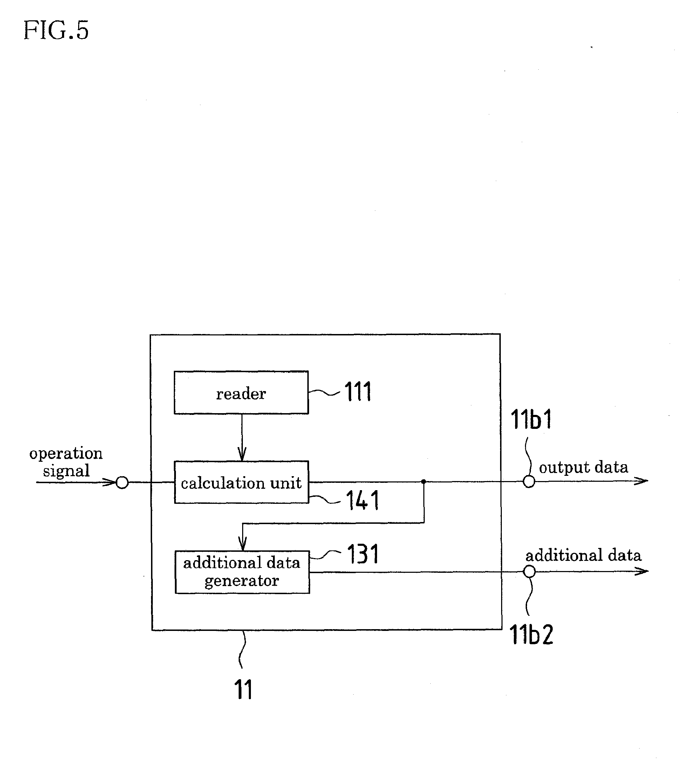

FIG. 4 is a diagram for describing an example living room in which Example 1 of the additional data generation system of the present invention is provided. FIG. 5 is a diagram for describing an example game device included in the additional data generation system of FIG. 4.

In the living room 100, a TV 101 is provided near a wall located on a right-hand side of the drawing sheet, a sofa 102 is provided near a wall located on a left-hand side of the drawing sheet, facing the TV 101, a table 103 is provided between the TV 101 and the sofa 102, and chairs 104 and 105 are provided along a vertical direction of the drawing sheet, facing each other with the table 103 being interposed therebetween. Note that the arrangement of the TV 101, the sofa 102, the table 103, the chairs 104 and 105 , and the like in the living room 100 is only for illustrative purposes. The present invention is not limited to this arrangement.

A game device 11 is connected via a cable 11a to the TV 101. A controller 21 (operation unit) is connected via a cable 121 to the game device 11. The TV 101 includes a display screen 51 and a loudspeaker (not shown) which constitute a first output unit. A plurality of lighting devices 61-67 provided in the living room 100 constitute a second output unit.

As shown in FIG. 5, the game device 11 includes a reader 111 (source unit), a calculation unit 141 (operation control unit), and an additional data generator 131.

The reader 111 reads out a game application and output information indicating a plurality of output signals from a recording medium (so-called "game software") storing the game application and the output information.

The calculation unit 141 functions as a change detecting means for detecting a change (e.g., at least one of an amount and a direction of the change) applied to the controller 21. The calculation unit 141 executes the game application read via the reader 111 from the game software, based on an operation signal from the controller 21, reads out an output signal based on the operation signal via the reader 111 from the output information, and converts the output signal to a level which can be handled by the display screen 51 and the loudspeaker of the TV 101 to obtain output data (here, image data and audio data).

The additional data generator 131 analyzes the output data obtained by the calculation unit 141 to generate additional data. Note that, as in the additional data generation system of FIG. 2, a portion functioning as the additional data generator 131 may be provided in the calculation unit 141, and the additional data generator 131 may be removed.

The output data is output from an output terminal 11b1 of the game device 11 to the TV 101. Based on the output data, an image is displayed on the display screen 51 of the TV 101 and sound is output from the loudspeaker of the TV 101. The additional data is output from another output terminal 11b2 of the game device 11 to the lighting devices 61-67. Based on the additional data, the operations of the lighting devices 61-67 are controlled. Note that the game device 11 and the lighting devices 61-67 may be connected via cables, or wireless communication such as infrared communication or the like.

The lighting devices 61-67 of FIG. 4 each include at least one of a red light emitting diode (LED) cell, a green LED cell, and a blue LED cell, i.e., are LED lighting devices which output light beams having various color temperatures. Note that, as the lighting devices 61-67, other light emitting resources having other colors, such as a halogen lamp and the like, can be used. The intensities of the light devices 61-67 can be preferably arbitrarily adjusted. The lighting devices 61-67 may include a spotlight or a projector. The irradiation directions of the lighting devices 61-67 may also be adjustable.

An example arrangement of the lighting devices 61-67 will be described. The four lighting devices 61-64 are provided at four corners of the floor of the living room 100, the lighting device 65 is provided on the ceiling of the living room 100, the lighting device 66 is provided around the display screen 51 of the TV 101, and the lighting device 67 is provided below the sofa 102. More preferably, of the four lighting devices 61-64, the two lighting devices 61 and 62 face each other with the TV 101 being interposed therebetween, and the other two lighting devices 63 and 64 face each other with the sofa 102 being interposed therebetween, and the lighting device 65 provided on the ceiling is used to illuminate the entire living room 100.

In this configuration, when an operation is performed using the controller 21, the calculation unit 141 executes the game application read from the recording medium to obtain output data corresponding to the operation. Thereafter, the output data is output to the TV 101, so that an image displayed on the display screen 51 and sound output from the loudspeaker are changed. In this case, the additional data generator 131 analyzes the output data (particularly, image data) to generate a plurality of pieces of additional data for controlling the lighting devices 61-67. The generated additional data is output from the game device 11 to the lighting devices 61-67. The lighting devices 61-67 are operated based on the additional data.

For example, when the game software provides a game in which a player clears a plurality of stages by avoiding various obstacles, an image displayed on the display screen 51 varies from moment to moment, depending on the player's operation using the controller 21. Here, the operations of the lighting devices 61-67 are changed in conformity with the variation of the image.

Specific example operations of the lighting devices 61-67 will be described. The lighting device 65 provided on the ceiling is adjusted according to an overall color of game space displayed on the display screen 51. For example, when the inside of a cave is displayed on the display screen 51, the lighting device 65 outputs dim light. When a center of the earth is displayed, the lighting device 65 outputs red light. When an underwater scene is displayed, the lighting device 65 outputs blue light. When sunny fields and mountains are displayed, the lighting device 65 outputs bright and white light having a color temperature of about 5500 K. In addition to this adjustment, the lighting devices 61-64 provided at the four corners of the living room 100 may be operated in a manner similar to that of the lighting device 65. The lighting device 66 provided around the display screen 51 of the TV 101 may be adjusted according to the overall color of the game space in a manner similar to the overall illumination. For example, when a flamethrower attack is displayed on the display screen 51, the lighting device 66 provided around the display screen 51 of the TV 101, the lighting devices 61-64 provided at the four corners of the living room 100, and the lighting device 67 provided below the sofa 102 may output strong red light.

Another specific example will be described. For example, it is assumed that the lighting devices 61-64 each include a spotlight which can adjust a light emission direction, a light emission color, or the like based on the additional data. When a scene in which one is moving from a dark underground place toward an exit for the bright ground is displayed on the display screen 51, the lighting devices 61-64 may be operated so that the light emission directions of the spotlights are changed in conformity with the approach toward the exit, whereby a bright area formed by light from the spotlights is moved from a place far away from the display screen 51 of the TV 101 to edge portions of the display screen 51.

A still another specific example will be described. It is assumed that an enemy is approaching. Before the enemy is displayed on the display screen 51, the lighting devices 61-64 provided at the four corner of the living room 100 may be used to project a shadow (shape) and a color of the enemy onto a place (e.g., a wall surface) other than the display screen 51. Alternatively, instead of projecting the enemy's shadow and color using the lighting devices 61-64, a projector may be incorporated into the lighting devices 61-64, and the lighting devices 61-64 may be operated to project an image of the enemy onto a place other than the display screen 51. In this case, the lighting devices 61-64 may be operated in conformity with the progress of a game so that the image of the enemy is approaching the display screen 51.

A still another specific example will be described. When one jumps onto an enemy and attacks it, the lighting devices 61-64 may be operated to project a color of the head of the enemy onto the sofa 102.

Note that the operation of the additional data generator may be controlled using an operating program for analyzing the output data. In this case, the additional data generator includes a storage means for storing the operating program, and a calculation means for executing the operating program to analyze the output data. Note that the calculation unit 141 may be used instead of the calculation means.

According to this example, by the player operating a character in game space using the controller 21, ambient light of the TV 101 and the player can be changed in real time, depending on changes in an image on the display screen 51 of the TV 101 and sound from the loudspeaker of the TV 101. As a result, the player can experience an increased sense of realism as if they were present in the game space, i.e., an information conveying effect can be additionally provided.

Although the additional data generation system of Embodiment 1 of FIG. 1 has been specifically described in this example, an additional data generation system according to another embodiment (e.g., Embodiment 2 (see FIG. 3)) may be used to achieve operations similar to those of this example.

In this case, the detector 7 is, for example, an image detection system including, for example, an image monitoring camera for monitoring the display screen of the TV included in the first output unit 5. The additional data generator 8 includes a storage means for storing an operating program, and a calculation means for executing the operating program to perform a calculation process, thereby generating additional data based on the result of the detection. The other configuration is similar to that of the additional data system of FIG. 4.

In this configuration, the additional data generator 8 executes the operating program to analyze an output signal of the detector 7, thereby extracting a feature in an image displayed on the display screen of the TV (e.g., a color, a brightness, an object, etc.), and generates additional data based on the extracted feature.

### <Example 2>

Next, Example 2 of the additional data generation system of the present invention will be described with reference to the drawings. Note that this example illustrates another example of the lighting devices included in the additional data generation system of Example 1. The additional data generation system of Example 2 is different from that of Example 1 in that the lighting device provided around the display screen of the TV is changed. The other configuration is similar to that of the additional data system of Example 1.

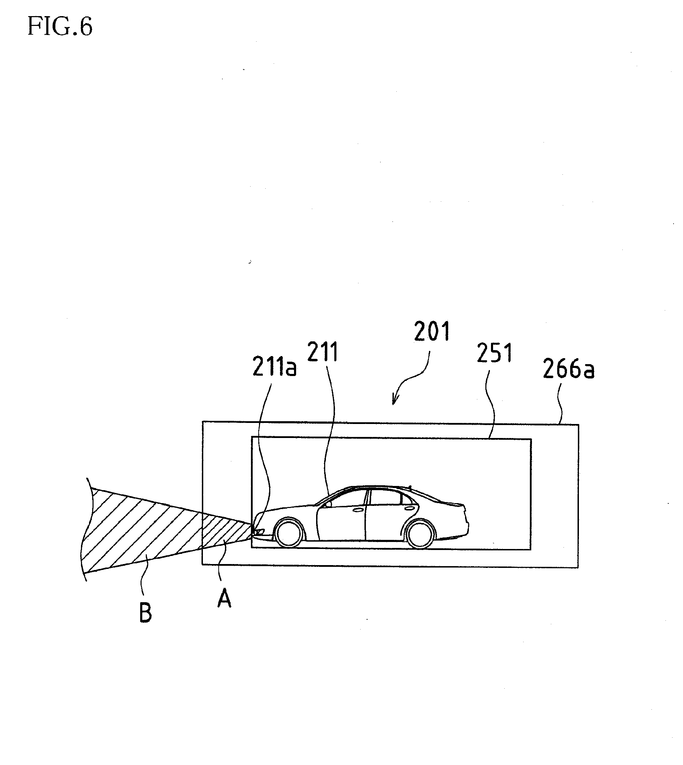

FIG. 6 is a diagram for describing Example 2 of the additional data generation system of the present invention, showing only the display screen of a TV and a lighting device provided around the display screen.

A lighting device 266a provided around a display screen 251 of a TV 201 is, for example, a display unit including a plurality of RGB LEDs, a projector, or a screen for a projector.

In this example, output data (image data and audio data) is generated by the calculation unit of a game device based on a player's operation of a controller, and additional data based on the image data is generated by the calculation means executing an operating program stored in the storage means of the additional data generation system. An image which is originally displayed on the display screen 251 of the TV 201 is displayed on a region including the display screen 251 and the lighting device 266a, and at the same time, other lighting devices (the lighting devices 61-65 and 67 in FIG. 4) are operated in a manner similar to that of Example 1. Specifically, the lighting device 266a is allowed to output an image having a resolution which is lower than that of the display screen 251 and is higher than those of the outputs of the lighting devices 61-64, and therefore, the resolution can be changed in a stepwise manner from the display screen 251 via the lighting device 266a to the lighting devices 61-64. As a result, an effect similar to that of Example 1 can be obtained without the player recognizing the discontinuity of the image on the display screen 251. Note that the recognition performance of the visual function of humans decreases with a distance from the center of the screen, and therefore, even if the resolution of an image or illumination displayed outside the display screen 251 is reduced, the sense of realism can be enhanced, i.e., an information conveying effect can be additionally provided.

Next, a specific example of this example will be described with reference to FIG. 6.

In FIG. 6, the display screen 251 shows an image including a car 211 as an object. The car 211 is traveling to the left on the drawing sheet with a headlight 211a on. Moreover, a white light image showing a light beam output from the headlight 211a is displayed in a region A of the lighting device 266a, and a background of the car 211 is displayed in the other region. Moreover, white light or a white light image is displayed in a region B (e.g., space, a projector screen, or a wall surface behind the TV) contiguous to the region A outside the lighting device 266a by an output of at least one of the lighting devices 61-64, whereby the white light is recognized as being an extension of light output from the headlight 211a. Note that the at least one of the lighting devices 61-64 that outputs light to the region B preferably is or includes a spotlight or a projector, and the spotlight or projector is preferably used to output light to the region B.

Another specific example will be described. An enemy may be displayed on the display screen after light indicating a shadow or a color (or an image) of the enemy is projected onto, for example, a wall surface behind the TV using at least one of the lighting devices 61-64. If the light indicating a shadow or a color (or an image) of the enemy is moved toward the display screen of the TV, then when the light indicating a shadow or a color (or an image) of the enemy reaches the lighting device 266a, video of the enemy's shadow or color may also be displayed on the lighting device 266a (only a part thereof is initially displayed). In this case, image data and audio data may be generated by the operation control unit based on an operation of the controller, and the operating program stored in the storage means included in the additional data generation system may be executed by the calculation means included in the additional data generation system based on the image data, whereby additional data based on which the operations of the lighting devices 266a and 61-64 are to be controlled is generated. By performing this operation, the enemy's approach can be expressed with an increased sense of realism, i.e., an information conveying effect can be additionally provided.

A still another specific example will be described. If a human is included as an object in an image displayed on the display screen, the facial expression of the human may be recognized, and the outputs of the lighting devices 266a and 61-64 may be controlled based on the result of the recognition. In this case, image data and audio data may be generated by the operation control unit based on an operation of the controller, and the operating program stored in the storage means included in the additional data generation system may be executed by the calculation means included in the additional data generation system based on the image data, whereby additional data based on which the operations of the lighting devices 266a and 61-64 are to be controlled is generated. By performing this control, the expression of emotion in an image can be enhanced. Note that the additional data generation system may analyze an output signal output from the source unit to recognize the facial expression of a human, or alternatively, the additional data generation system may analyze an output signal output from the detector for monitoring the display screen (see FIG. 3) to recognize the facial expression of a human.

### <Example 3>

Next, Example 3 of the additional data generation system of the present invention will be described with reference to the drawings. Note that, in this example, a surround loudspeaker system is added to the additional data generation system of Example 1 (see FIG. 4). Specifically, while the second output unit includes only a lighting device in the additional data generation system of Example 1, the additional data generation system of this example includes a second output unit including a lighting device and a surround loudspeaker system.

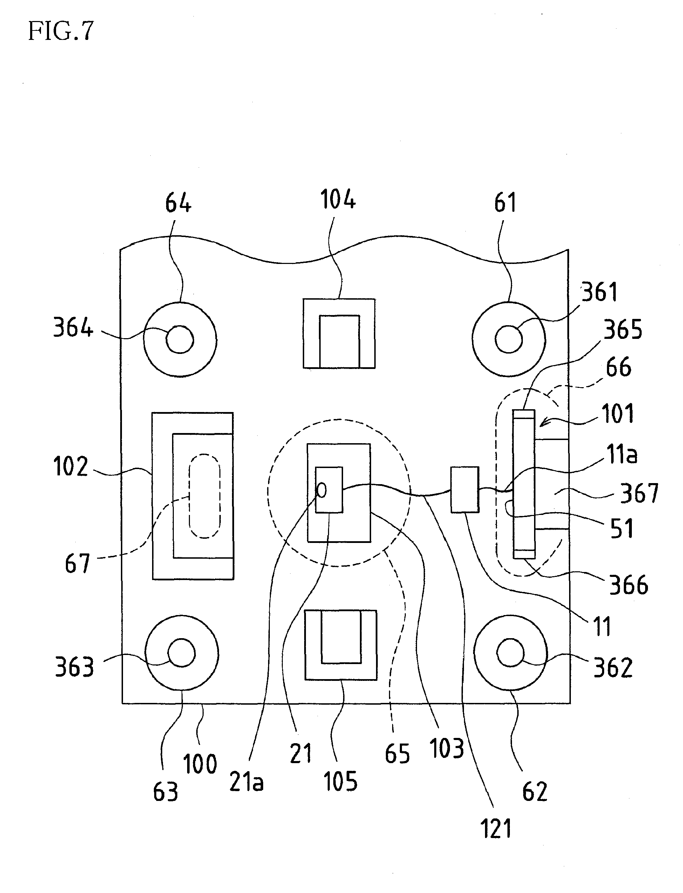

FIG. 7 is a diagram for describing an example living room in which Example 3 of the additional data generation system of the present invention is provided. Parts similar to those of the additional data generation system of FIG. 4 are indicated by the same reference characters.

In this additional data generation system, four surround loudspeakers 361-364 (4-channel surround system) are provided along with the lighting devices 61-64 at four corners of the living room 100. Left and right front loudspeakers 365 and 366 are provided at left and right ends of the display screen 51 of the TV 101 as viewed from a position facing the display screen 51. A center loudspeaker (not shown) is provided at a lower-middle end of the display screen 51 of the TV 101 as viewed from a position facing the display screen 51. A subwoofer 367 which outputs low-pitched sound is provided in the vicinity of the center loudspeaker. In other words, the surround loudspeakers 361-364, the front loudspeakers 365 and 366, the center loudspeaker, and the subwoofer 367 constitute a 7.1-channel surround loudspeaker system.

The additional data generator provided in the game device 11 analyzes image data and audio data generated by the signal processing unit (not shown) in the game device 11 to generate a plurality of pieces of additional data (audio data) for controlling the lighting devices 61-67, the surround loudspeakers 361-364, the front loudspeakers 365 and 366, the center loudspeaker, and the subwoofer 367.

In the additional data generation system of this example, the surround loudspeaker system is provided, and the additional data generator generates additional data for controlling not only the lighting devices 61-67, but also the surround loudspeaker system. The other configuration is similar to that of the additional data generation system of FIG. 4. Note that, here, the controller 21, which is held by a hand of the player, includes an acceleration sensor which detects a change applied to the main body of the controller 21. The controller 21 may further include a hand loudspeaker 21a which outputs sound to enhance the sense of realism and serves as a component of the second output unit.

The controller 21 outputs an operation signal to the game device 11, depending on a change (at least one of a change amount and a change direction) detected by the acceleration sensor. In the game device 11, a reader reads out a game application based on the operation signal, and the signal processing unit performs a calculation process to generate output data and additional data. As a result, the display screen 51 and the loudspeaker of the TV 101, which constitute the first output unit, output an image or sound based on the output data, and the lighting devices 61-66, the surround loudspeaker system (the surround loudspeakers 361-364, the front loudspeakers 365 and 366, the center loudspeaker, and the subwoofer 367), and the hand loudspeaker 21a, which constitute the second output unit, selectively output at least one of light, video, and audio based on the additional data.

A first specific example of the output based on the additional data will be described. For example, a game application is assumed to be a baseball game. The front loudspeakers 365 and 366 may output a sound effect which causes the player to feel as if a ball were coming to them (from the display screen 51) immediately after the ball is thrown by a pitcher displayed on the display screen 51. By outputting such a sound effect, the sense of realism can be enhanced.

A second specific example will be described. The player swings the controller 21 like a bat in response to throwing of a pitcher displayed on the display screen 51. When the bat hits a ball in game space, the hand loudspeaker 21a may output a sound effect which causes the player to feel as if the bat actually hit the ball. In this case, at the same time, a lighting device (e.g., the lighting device 65 provided on the ceiling) provided in the living room 100 may be caused to output light brighter than normal (flash light). When the player hits an extra-base hit in game space, the trajectory of the ball and the movement of a fielder may be displayed on the display screen 51. In addition, the hand loudspeaker 21a may output a sound effect which sounds like footsteps (the sound of foots kicking the ground) produced by a running batter, and the surround loudspeaker system may output a sound effect which sounds like cheer from spectators. Moreover, when a batter stands in the batter's box or returns to home plate to score a run in game space, an image may be displayed on the display screen 51, the center loudspeaker or the like may output a sound effect which sounds like a running commentary of a commentator, and the surround loudspeaker system may output a sound effect which sounds like cheer from spectators. Also in this case, the lighting devices 61-67 may output flash light brighter than normal. By outputting such a sound effect or light, the sense of realism can be enhanced.

A third specific example will be described. When the player swings the controller 21, loudspeakers in the living room 100 and the controller 21 may output sound, or the sound may be varied. In other words, in this specific example, audio data is generated as additional data.

More specifically, a game application may mimic playing guitar. When the player snaps a wrist to swing the controller 21 as if they stroked, the hand loudspeaker 21a may output guitar sound, depending on the movement of the controller 21, for example. By thus causing the hand loudspeaker 21a to output sound, the player experiences a sense of realism as if they actually played guitar.

A game application may mimic performance of an orchestra. When the player snaps a wrist to swing the controller 21 as if they conducted, the number of musical instruments or the number of types of musical instruments (the number of sounds) may be changed, depending on the strength of the swing motion or the orientation of the controller 21, and also, the rhythm of the performance may be changed, depending on the rhythm of the swing motion. The orientation of the controller may be determined by an infrared sensor of the controller sensing infrared LEDs provided at an upper end portion of the display screen 51. Here, in addition to the loudspeaker of the TV 101, the surround loudspeaker system (mainly the surround loudspeakers 361-364) outputs sound, thereby enhancing the sense of realism. The loudspeakers which output sound may be changed, depending on the musical instrument type. In this case, the direction in which the player hears sound can be varied, depending on the musical instrument type. Note that when a performance of an orchestra is mimicked in this manner, a performance of each of a plurality of types of musical instruments is mimicked, and therefore, an image indicating the type of a musical instrument(s) which is being played is displayed on the display screen 51.

### <Example 4>

Next, Example 4 of the additional data generation system of the present invention will be described with reference to the drawings. Note that, in this example, a vibrator is added to the additional data generation system of Example 2 (see FIG. 7). Specifically, while the lighting devices and the surround loudspeaker system constitute the second output unit in the additional data generation system of Example 1, lighting devices, a surround loudspeaker system, a hand loudspeaker, and a vibrator constitute a second output unit in the additional data generation system of this example.

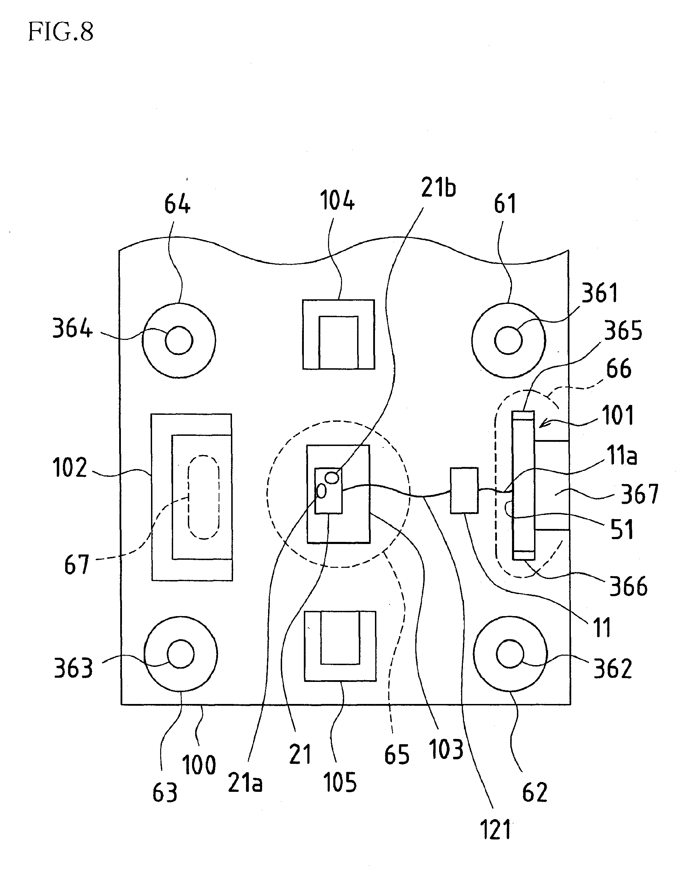

FIG. 8 is a diagram for describing an example living room in which Example 4 of the additional data generation system of the present invention is provided. Parts similar to those of the additional data generation system of FIG. 7 are indicated by the same reference characters.

In the additional data generation system of this example, a vibrator 21b is included in the controller 21, and an additional data generator also generates additional data for controlling the vibrator 21b. The other configuration is similar to that of the additional data generation system of FIG. 7.

A first specific example of an output based on the additional data will be described. For example, a game application is assumed to be a baseball game. When a ball hits a bat in game space, the hand loudspeaker 21a of the controller 21 may generate a sound effect, and at the same time, the vibrator 21b may vibrate quickly and sharply so that the player feels as if a ball actually hit a bat which is gripped by them. By outputting such a sound effect and vibration, the player can experience a sense of realism as if they actually hit a ball using a bat.

A second specific example will be described. A game application is assumed to mimic playing guitar. When the player swings the controller 21 as if they played guitar, the hand loudspeaker 21a may output guitar sound, and at the same time, the vibrator 21b may finely vibrate as if the player actually touched strings. By outputting such guitar sound and vibration, the player can experience a sense of realism as if they actually played guitar.

### <Variation 1 of Example 4>

Next, Variation 1 of Example 4 of the additional data generation system of the present invention will be described.

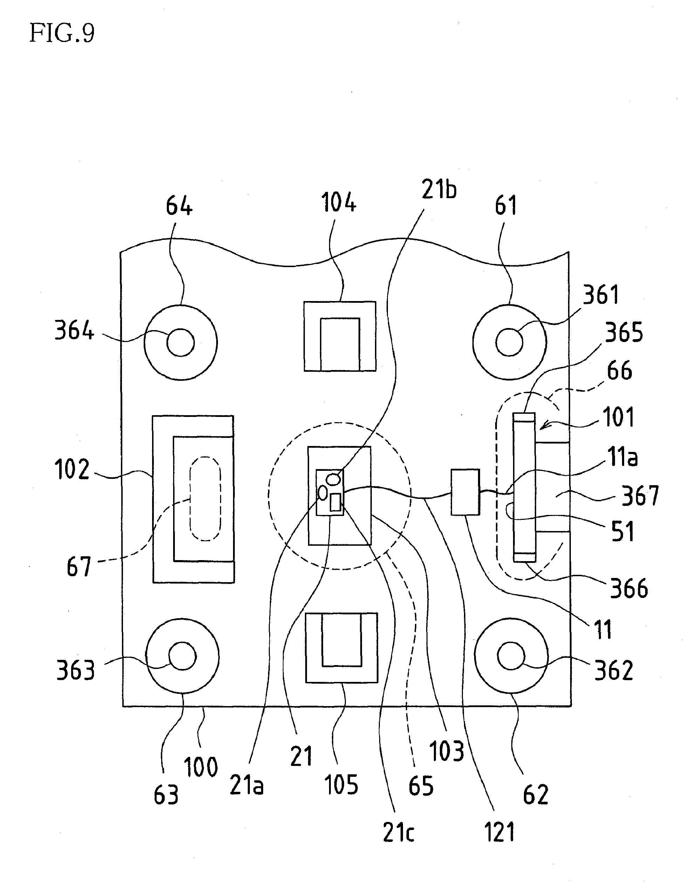

FIG. 9 is a diagram for describing an example living room in which Variation 1 of Example 4 of the additional data generation system of the present invention is provided. Parts similar to those of the additional data generation system of FIG. 8 are indicated by the same reference characters.

In this additional data generation system, a display device 21c is provided in the controller 21, and the additional data generator also generates additional data for controlling the display device 21c. The other configuration is similar to that of the additional data generation system of FIG. 8. Specifically, here, the lighting devices 61-66 and the surround loudspeaker system (the surround loudspeakers 361-364, the front loudspeakers 365 and 366, the center loudspeaker, and the subwoofer 367) provided in the living room 100, the hand loudspeaker 21a, the vibrator 21b, and the display device 21c constitute a second output unit.

The display device 21c may display information including graphics, characters, and the like or may change a light emission color and/or a light emission pattern. For example, the display device 21c is a liquid crystal display device, a LED display device including RGB LEDs, or a light emitting apparatus including at least one of RGB LEDs.

A specific example output based on the additional data will be described. For example, a game application is assumed to mimic a performance of an orchestra. When the player swings the controller 21 as if they conducted, the loudspeaker of the TV 101 or the surround loudspeaker system outputs sound, and at the same time, an evaluation of conducting may be displayed on the display device 21c. In this case, the display device 21c may indicate the evaluation by displaying specific information or by changing the intensity of light emission or the number of lights turned on. By outputting such sound and evaluation display, the sense of realism can be enhanced, and a sense of tension can be provided by explicitly indicating the evaluation of conducting.

Note that, in this specific example, the controller 21 which does not include the hand loudspeaker 21a and the vibrator 21b may be used.

### < Variation 2 of Example 4>

Next, Variation 2 of Example 4 of the additional data generation system of the present invention will be described.

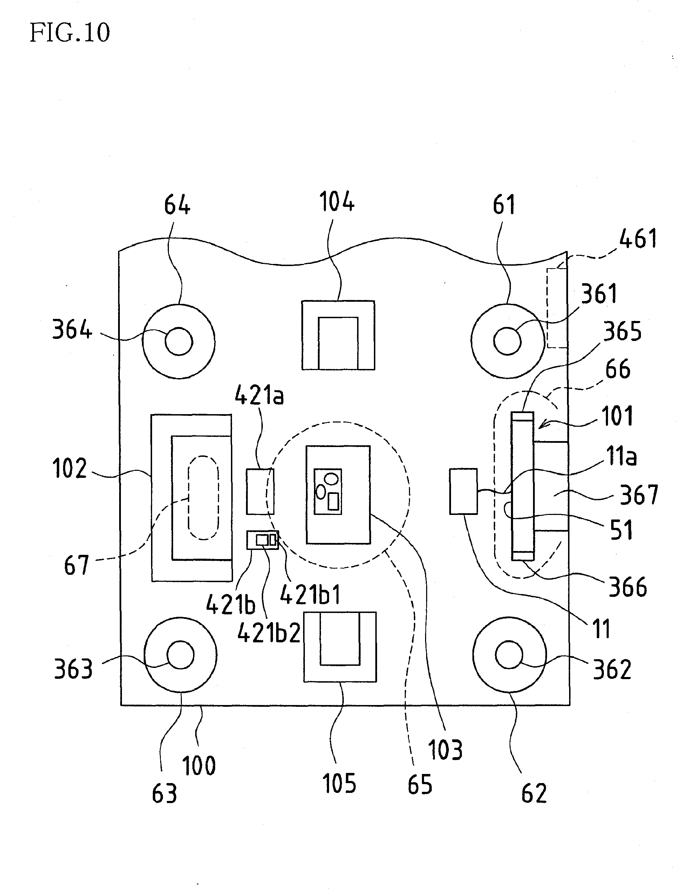

FIG. 10 is a diagram for describing an example living room in which Variation 2 of Example 4 of the additional data generation system of the present invention is provided. Parts similar to those of the additional data generation system of FIG. 8 are indicated by the same reference characters.

In the additional data generation system, an air conditioning system 461 is provided in the living room 100, and the additional data generator also generates additional data for controlling the air conditioning system 461. The other configuration is similar to that of the additional data generation system of FIG. 8. Specifically, here, the lighting devices 61-66 and the surround loudspeaker system (the surround loudspeakers 361-364, the front loudspeakers 365 and 366, the center loudspeaker, and the subwoofer 367) provided in the living room 100, a hand loudspeaker 421b1 (having a configuration similar to that of the hand loudspeaker 21a of FIG. 8), a vibrator 421b2 (having a configuration similar to that of the vibrator 21b of FIG. 8), and the air conditioning system 461 provided in the ceiling of the living room 100 constitute a second output unit.

As an example electronic device including the additional data generation system, a game device in which a game application for simulating skiing is installed will be described.

In this case, the controller includes a main controller 421a provided on the floor and a sub-controller 421b held by a hand of the player. Note that, here, the main controller 421a and the sub-controller 421b are connected to the game device 11 by a wireless communication system which employs an optical signal, such as infrared light or the like. Signals, such as an operation signal, additional data, and the like, are transmitted and received via the wireless communication system.

The main controller 421a includes various sensors which detect a timing, a movement direction, a movement amount, and the like of weight shift which is performed by the player standing on the main controller 421a, and generates an operation signal based on the result of the detection. The sub-controller 421b includes an acceleration sensor which detects a timing, a direction, an amount, and the like when the player swings the sub-controller 421b as if they used a ski pole, and generates an operation signal based on the result of the detection. The sub-controller 421b further includes the hand loudspeaker 421b1 and the vibrator 421b2.

A specific example output which is obtained based on the additional data in the additional data generation system thus configured will be described. For example, the player standing on the main controller 421a while holding the sub-controller 421b with a hand shifts the weight of their body on the main controller 421a and swings the sub-controller 421b while viewing an image of a ski area displayed on the display screen 51 of the TV 101, as if they actually were skiing. In this case, the air conditioning system may blow, toward the player, cool wind whose strength is adjusted, depending on a speed at which the player is skiing on a slope in game space. In addition, every time the player plants the ski pole in game space, the vibrator 421b2 may vibrate and the hand loudspeaker 421b1 may output sound which occurs when a ski pole strikes snow. By outputting such wind, sound, and vibration, the sense of realism can be enhanced.

Moreover, an illumination effect or an image display may be provided using the lighting devices 61-64 so that a scenery of a snow mountain moves from the front to the back around the player, and the surround loudspeakers 361-364 may output sound which occurs during skiing. In this case, the sense of realism can be further enhanced.

### <Example 5>

Next, Example 5 of the additional data generation system of the present invention will be described with reference to the drawings. Note that this example is used to more specifically describe the additional data generation system of Embodiment 1 of FIG. 1. Note that the operation control unit and the additional data generator of the additional data generation system of FIG. 1 are implemented by a single calculation unit.

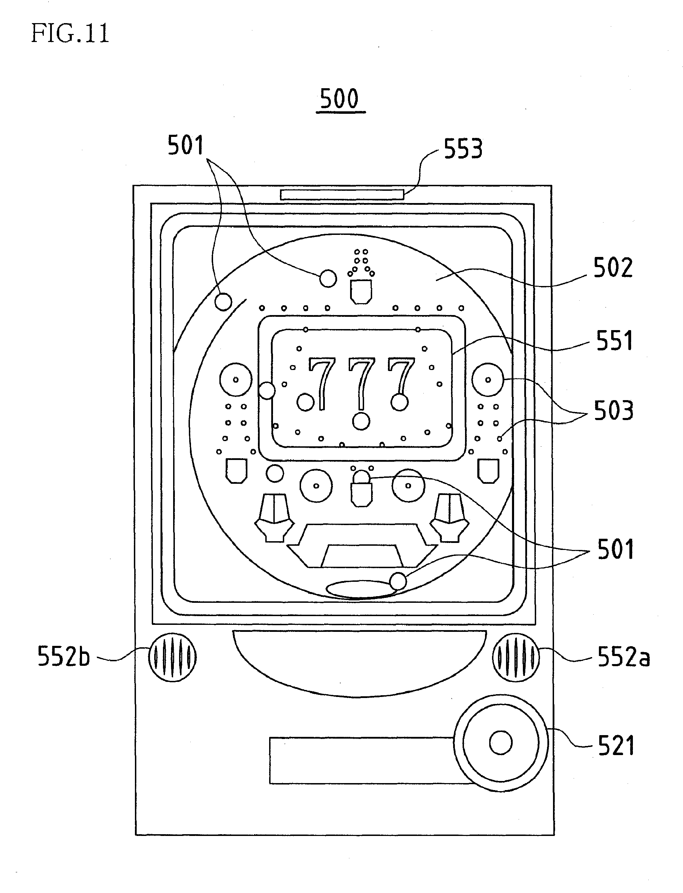

FIG. 11 is a diagram for describing an amusement device which is implemented as Example 5 of the additional data generation system of the present invention. Although FIG. 11 shows a pachinko machine as the amusement device, a slot machine or the like may be used, for example.

The pachinko machine 500 includes a reader (source unit, not shown) which reads a control program for controlling the pachinko machine 500 and control data relating to the control from a recording medium which stores the control program and the control data, an adjusting dial (operation unit; a lever or a button in the case of slot machines) 521 for firing a ball, a calculation unit (operation control unit, not shown) which controls a basic operation of the pachinko machine 500 based on the control program and the control data read via the reader and a state of a pachinko ball 501 changed by an operation of the adjusting dial 521, and also controls an additional operation of the pachinko machine 500, and an output unit serving as both a first output unit and a second output unit described below.

In this example, the first and second output units of the additional data generation system of FIG. 1 are implemented by a single output unit, i.e., the first and second output units are not separately provided. Note that a plurality of output units are provided in the pachinko machine 500. Specifically, the pachinko machine 500 includes a display device 551 provided at a center portion of a front surface of the pachinko machine 500, loudspeakers 552a and 552b which output sound, and a lighting device 553 provided in an edge portion of the pachinko machine 500.

In general, the pachinko ball 501 is fired by an operation of the adjusting dial 521, and then falls from the top to the bottom of the board surface 502 of the pachinko machine 500 while striking a plurality of obstacles (e.g., pins, etc.) 503 to change its traveling direction. The falling pachinko ball 501 generates sound and vibration, and therefore, the pachinko ball 501 itself serves as an output unit. Note that the behavior of the pachinko ball 501 is not controlled by the calculation unit, and is controlled by an operation of the adjusting dial 521. In this point, the additional data generation system of FIG. 11 is different from that of FIG. 1.

In the pachinko machine 500 of FIG. 11, the calculation unit executes a control program to change image data, audio data, and operation control data for controlling an operation of the display unit, depending on the state of the pachinko ball 501 which is fired by an operation of the adjusting dial 521 and then falls on the board surface 502 (e.g., the pachinko ball 501 passes through a predetermined portion, etc.). As a result, basic operational changes, such as changes in an image displayed on the display device 551, sound output from the loudspeakers 552a and 552b, an illumination pattern or a color of the lighting device 553, and the like, are provided.

Moreover, in the pachinko machine 500 of FIG. 11, an additional operation is changed, depending on the state of the pachinko ball 501 fired by an operation of the adjusting dial 521. For example, when it is determined based on the state of the falling pachinko ball 501 that the pachinko machine 500 is close to a "reach (ready hand) mode," an additional operation, such as switching on/off of the lighting device 553 or the like, displaying of an image on the display device 551, or the like, is changed, thereby indicating that the pachinko machine 500 is close to the reach (ready hand) mode. Note that a lighting device for an additional operation is not limited to the lighting device 553 of FIG. 11. Such a lighting device may include at least one of one which is provided at other portions of the edge portion of the pachinko machine 500, one which is provided at an obstacle 503, such as a pin or the like, and one which is provided on the board surface 502.

As output units, a plurality of pachinko ball detectors (not shown) and a plurality of lighting devices (not shown) may be further provided at portions of the board surface 502 where the pachinko ball 501 can pass through (hereinafter also simply referred to as "passing portions"). In this case, when the pachinko ball 501 has passed on a pachinko ball detector, the calculation unit performs a control to turn on a lighting device provided in the vicinity of that pachinko ball detector, whereby an illumination pattern which highlights the trajectory of the pachinko ball 501 like a comet tail is provided.

According to the additional data generation system of this example, the level of amusement of the amusement device can be increased.

### <Example 6>

Next, Example 6 of the additional data generation system of the present invention will be described. Note that this example is used to more specifically describe the additional data generation system of Embodiment 1 shown in FIG. 1. Note that the additional data generator included in the additional data system of FIG. 1 is provided in an operation control unit.

In this example, an additional data generation system for use in a TV on which an interactive television can be viewed will be described.

In general, interactive television is a service in which information bidirectionally flows between a broadcaster and viewers. By using the interactive television, requests can be invited and played in a program, viewers can do online shopping while viewing a program, weather information only for a region desired by viewers can be displayed, or viewers can participate in a quiz show and answer questions or respond to surveys, i.e., viewers' desire can be reflected on a program in real time. Interactive television is implemented using digital broadcasting or cable television (CATV).

The TV includes a communication terminal device (source unit) which receives an interactive television signal transmitted from a television station to viewers, a remote controller (operation unit) which is operated by a viewer, an operation control unit which obtains, from a signal received by the communication terminal device, image data and audio data on a channel selected by the viewer operating the remote controller, and generates additional data based on the image data and the audio data, a display screen and a loudspeaker (first output unit) which output the image data and the audio data, respectively, and a lighting device and an additional loudspeaker (second output unit) which are operated based on the additional data. Note that, as the lighting device which is operated based on the additional data, for example, the lighting devices 61-65 of FIG. 7 are provided, and as the additional loudspeaker, a loudspeaker which is included in the remote controller or a loudspeaker which is placed in the vicinity of a viewer is provided.

In general, it is assumed that a viewer has selected a channel on which a quiz show is aired. When the viewer selects "A" as an answer using the remote controller in response to a question displayed on the display screen, a signal indicating that the viewer has selected "A" is transmitted from the communication terminal device to the television station, which in turn increases the total number of viewers who have selected "A" by one. The results of the selection and the count are immediately reflected on an image displayed on the display screen or sound output from a loudspeaker. Thereafter, after a period of time which allows a viewer to answer has elapsed, the result of determination of whether the viewer's answer is correct or incorrect is displayed on the display screen based on a signal transmitted from the television station.

A specific example output based on additional data in this case will be described. When a correct answer is announced, the lighting devices provided in the living room may be caused to be dark. In this case, the operation control unit analyzes image data obtained from a signal transmitted from the television station to generate additional data based on which the lighting devices are caused to be dark at a timing that image data for announcing the correct answer is obtained.

Moreover, additional data may be generated so that if the viewer's answer is correct, the additional loudspeaker may output sound indicating the correctness, such as a fanfare or the like, and in addition, a lighting device outputs flickering white light, and if the viewer's is incorrect, only the lighting device for illuminating the entire room which is provided on the ceiling output red light. In this case, a number on the remote controller which the viewer has pressed down is checked against a correct number obtained from the image data, and additional data is generated based on the result of the check.

According to the additional data generation system of this example, the sense of realism can be enhanced.

### <Example 7>

Next, Example 7 of the additional data generation system of the present invention will be described.

In this example, a sensor for an operator is added to the additional data generation system of Embodiment 1 or 2.

The operator sensor is attached to the body of an operator (e.g., a player, a viewer, etc.), and monitors information about the body. Specifically, the operator sensor includes a plurality of sensors which are fixed to a finger, a wrist, an ankle, a face, or the like and measures pulse, blood oxygen level, blood pressure, perspiration, respiration rate, line of sight, or the like. Note that a sensor which is fixed to a finger may be included in the operation unit, and may perform a measurement when an operator holds the operation unit.

The result of the detection by the operator sensor is input to the additional data generator. Based on the result of the detection, the additional data generator determines whether or not the operator is nervous, and when the operator is nervous, changes the additional data to one which relaxes the operator's tension.

Note that the result of the detection by the operator sensor may be input to the operation control unit instead of the additional data generator. The operation of the additional data generator may be controlled by the operation control unit based on the result of the detection by the operator sensor. Moreover, the additional data generator may be provided in the operation control unit.

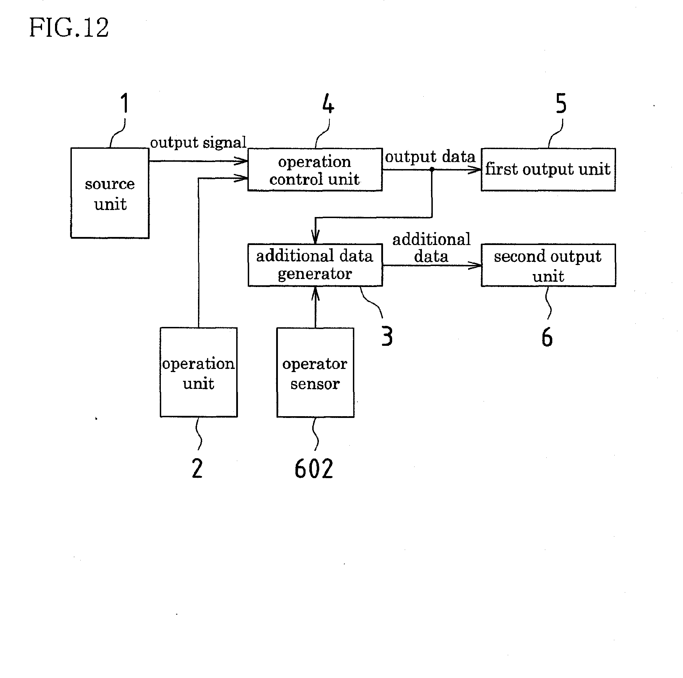

FIG. 12 is a diagram for describing an example in which the operator sensor is added to the additional data generation system of FIG. 1.

In the additional data generation system of FIG. 12, an output of an operator sensor 602 is input to the additional data generator 3. The other configuration of the additional data generation system is similar to that of the additional data generation system of FIG. 1 and will not be described in detail.

For example, when a television program is screened or a DVD is played by the first output unit 5, the output of the operator sensor 602 is invariably input to the additional data generator 3, whereby the tension condition of the operator can be invariably monitored.

During the monitoring, if the result of the detection by the operator sensor detects that the pulse of the operator is higher than a predetermined level, the blood pressure is increased or decreased, perspiration occurs, the respiration rate is rapid, or the like, i.e., the operator is nervous, the additional data generated by the additional data generator 3 is changed to one which relaxes the tension, and the output of the second output unit is changed. For example, when the second output unit includes a lighting device and an additional loudspeaker, the lighting device may emit light having a bright color which can relax the operator, or the additional loudspeaker may be turned off. Note that the additional data for relaxing the tension is previously set and stored.

According to the additional data generation system of this example, the sense of realism can be enhanced during normal operations as in the additional data generation system of Embodiment 1 or 2. Moreover, when the operator is nervous, the additional data is changed to one which relaxes the tension, thereby reducing excessive stress on the operator.

Note that the present invention is not limited to a case where a television program is screened or a DVD is played by the first output unit 5. The aforementioned additional data generation system may be, for example, incorporated into a game device. In this case, when it is determined based on the result of detection by the operator sensor that the impatience of the player is higher than a predetermined level, the additional data generator generates additional data which causes a lighting device to change output light to brighter light which can relax the player or causes the additional loudspeaker to reduce its volume or turn off. Moreover, the operation control unit may adjust the difficulty level of a game based on the result of detection by the operator sensor. In this case, when it is determined that the impatience of the player is higher than a predetermined level, the operation control unit performs a control to reduce the difficulty level of a game.

Variation 1 of Example 7 will be described. The following additional data generator may be provided. When the result of detection by the operator sensor indicates that the player is not nervous, the additional data generator changes the additional data to, for example, one which causes the surround loudspeaker system to exhibit the surround effect, causes a loudspeaker to output sound having a wider frequency range or a higher volume, or causes a lighting device to output extremely dark (or bright) light or light having a limited number of hues. As a result, the sense of realism can be further enhanced.

A specific example output based on the additional data generated by the additional data generator will be described. For example, a game application is assumed to provide a game including a stage in which an enemy which cannot be seen is searched for. In this case, a threshold (a value, such as an upper limit or the like, or a value range) may be set only for at least a portion of the results of detection by the operator sensor (e.g., pulse and blood pressure). The detection results are compared with the respective thresholds. When the detection results do not exceed the thresholds, the surround effect of the surround loudspeaker system may be adjusted so that the player can hear the enemy's footstep from their back, or the subwoofer may be caused to output unstable sound, and in addition, a lighting device may be caused to output extremely dark light or light having a limited number of hues. Moreover, when the detection results exceed the thresholds, the additional data may be changed so that the output of the surround loudspeaker system is turned off, or the tone of light output from a lighting device becomes brighter, resulting in an environment which allows the player to relax.

By providing such an output, the sense of realism can be adjusted (e.g., enhanced, limited, etc.), depending on the tension of the player.

Variation 2 of Example 7 will be described. An additional data generator may be provided which can change the additional data, depending on the detection result of the operator sensor, so that the outputs of a lighting device and the surround loudspeaker system are changed, whereby an environment around the operator can be adjusted.

A specific example output based on the additional data generated by the additional data generator will be described. For example, when the operator feels depressed (i.e., at least one of the detection results of the operator sensor indicates shallow respiration, a sigh, downcast eyes, or the like), light output from a lighting device may be adjusted to be brighter within the range in which the operator can relax, or the surround loudspeaker system automatically outputs music which allows the operator to relax during a commercial break of a television program which the operator is viewing. When a physical condition of the operator changes suddenly (i.e., at least one of the detection results of the operator sensor indicates a sudden change in blood pressure or pulse rate, arrhythmia, significant perspiration, or the like), the lighting devices provided on the ceiling may be adjusted to a normal state, and lighting devices other than the ceiling lighting devices and the loudspeakers in the surround loudspeaker system are turned off, and thereafter, an announcement (e.g., a message prompting the operator to take a deep breath or sit down on a sofa, etc.) which calms down the physical condition of the operation may be output from the center loudspeaker or the like.

By providing such an output, the heath condition of the operator holding the operator sensor can be backed up. As a result, the additional data generation system can be utilized as a sense-of-realism improving system which places primary importance on health.

Note that the additional data generation system including the operator sensor may be configured to feed (input) the detection result of the operator sensor back to the source unit itself so that an output signal output from the source unit is changed. In order to perform a fine control so that the detection result is sequentially reflected, the detection result is preferably fed back to the operation control unit or the additional data generator.

### <Example 8>

Next, Example 8 of the additional data generation system of the present invention will be described.

In the additional data generation system of this example, a second output unit provided in an operation unit functions as the operation unit as well. In other words, an output based on additional data is indirectly used for an operator's operation.

Here, as a specific example, a case where the display device 21c included in the additional data generation system of Variation 1 of Example 4 (see FIG. 9) as well as the controller 21 functions an operation unit will be described.

In this case, the display device 21c includes an infrared LED and an infrared sensor. When the player performs an operation in which the player places their finger or the like over the display device 21c for a predetermined period of time to interrupt the output of the display device 21c, the infrared sensor detects this operation. The result of the detection is input to a calculation unit (operation control unit). The calculation unit controls the operation of the game device 11 based on the detection result. As an example of the operation control based on the detection result, when the player places their finger over the display device 21c for the predetermined period of time (e.g., one second or more), the game device 11 may be temporarily stopped and a data saving operation may be performed.

According to the additional data generation system of this example, the operation can be further simplified, whereby useless power consumption can be further reduced, resulting in an environmentally friendly system.

### <Example 9>

Next, Example 9 of the additional data generation system of the present invention will be described.

In the additional data generation system of this example, an operator sensor is configured to function as an operation unit as well.

Here, a case where, of the operation sensors included in the additional data generation system of Example 7, a line-of-sight sensor which detects a line of sight of an operator and functions as an operation unit as well will be described.

In this case, the line-of-sight sensor is attached to a glasses-shaped support frame, and can detect a position of the display screen of a TV or the like which the operator views.

In the additional data generation system, when the operator wearing the line-of-sight sensor performs a predetermined operation, the line-of-sight sensor detects this operation. The result of the detection is input to a calculation unit (operation control unit). The calculation unit controls an operation of the TV based on the detection result. An example of the operation control based on the detection result will be described. When the operator gazes at a program field corresponding to a program which the operator desires to record by programmed recording, on a program table displayed on the display screen of the TV, for a predetermined period of time (e.g., two seconds or more) and thereafter quickly blinks a predetermined number of times (e.g., three times), the procedure of programmed recording of the program indicated by the gazed program field is completed.

Another example operation control will be described. When recognizing, based on the detection result of the line-of-sight sensor, that the operator has not viewed the display screen of the TV for a predetermined period of time or more, the operation control unit outputs, to the first output unit, output data (image data and/or audio data) which prompts the operator to power off the TV. In this case, the additional data generator may generate additional data for prompting the operator to power off the TV based on the output data output from the operation control unit, and may output the additional data to the second output unit.

According to the additional data generation system of this example, the operation is further simplified, whereby a more convenient life can be achieved, and useless power consumption can be further reduced, resulting in an environmentally friendly life.

### <Example 10>

Next, Example 10 of the additional data generation system of the present invention will be described.

In this example, a case where an additional data generation system is implemented in a receiver for a wireless emergency alert system will be described.

The wireless emergency alert system receiver includes: an emergency alert signal reception unit (source unit) which extracts an emergency alert signal from a signal transmitted from a television station; an operator detection sensor (operation unit) which detects an evacuation state of the operator, an operation control unit which performs an operation control for outputting information (emergency alert information) indicated by the emergency alert signal received by the emergency alert signal reception unit; a display screen and a loudspeaker of a TV, and a lighting element provided in a main body of the wireless emergency alert system receiver (first output unit); a lighting device, a loudspeaker, and other output devices (e.g., the lighting devices 61-67, the surround loudspeaker system (the surround loudspeakers 361-364, the front loudspeakers 365 and 366, the center loudspeaker, and the subwoofer 367), the hand loudspeaker 21a, the vibrator 21b, the display device 21c, etc. shown in FIG. 9) (second output unit); and an additional data generator which generates additional data which is to be output to the second output unit, based on the result of detection by the operator detection sensor.

An example operation of a general wireless emergency alert system receiver will be described. It is assumed that an emergency, such as an earthquake, a typhoon, a tsunami, or the like, occurs, and then, a television station transmits an emergency alert signal. When the emergency alert signal reception unit extracts the emergency alert signal, the operation control unit may power on the TV (or an image and sound which are being output on the TV are interrupted), the display screen and the loudspeaker of the TV may output emergency alert information, and the lighting element provided in the main body of the wireless emergency alert system may emit red light.

Moreover, in the wireless emergency alert system receiver of this example, when the operation control unit outputs output data for outputting emergency alert information as in the above example operation, then if the result of detection by the operator detection sensor indicates that the operator has not escaped outdoors (e.g., the operator is still holding the operation unit, or a motion sensor indicates that a human is in the living room), the additional data generator generates additional data, and the second output unit outputs evacuation advisory information. A specific example output indicating the evacuation advisory information will be described. A color of light output from a lighting device may be changed every other second, or large-volume sound indicating the evacuation advisory information is output from the surround loudspeaker system. This output may be continued as long as evacuation is required, particularly preferably as long as a human is in the living room. The details of the evacuation state and the evacuation advisory information vary, depending on the emergency alert information.

According to the additional data generation system of this example, information can be quickly and reliably conveyed during emergencies.

Note that the operator sensor may be provided in an operation unit, such as a remote controller of a TV or the like. In this case, when the emergency alert signal is not being transmitted, the additional data generator may analyze output data to the first output unit to generate additional data, and the second output unit may be operated based on the additional data, as in the additional data generation system of Example 1. As a result, a higher sense of realism can be added to the output of the TV.

Moreover, in the above embodiments and examples, the output based on the output data and the additional data can be changed based on conditions of the operator or settings previously set by the operator, and is not limited to the foregoing.

Moreover, in the above embodiments and examples, the operation signal output from the operation unit is input to the operation control unit. Alternatively, the operation signal may be input to the source unit. As a result, the output signal from the source unit can be changed based on an operation using the operation unit. Therefore, when the operation signal is output to the source unit, the output data can be reliably changed.

Note that Examples 1-10 have been used to more specifically describe Embodiments 1-3, and the present invention is not limited to those examples. In other words, the additional data generation system of the present invention is not limited to Examples 1-10, and other alternative examples can be designed without departing the scope of the present invention.

The present invention can be embodied and practiced in other different forms without departing from the spirit and essential characteristics thereof. Therefore, the above-described embodiments are considered in all respects as illustrative and not restrictive. The scope of the invention is indicated by the appended claims rather than by the foregoing description. All variations and modifications falling within the equivalency range of the appended claims are intended to be embraced therein.

This application claims priority on Patent Application No. 2008-192453 filed in Japan on July 25, 2008, which is herein incorporated by reference in its entirety.

### Industrial Applicability

The additional data generation system of the present invention can be used to impart an information conveying effect to an output of an output device provided in a living room at home.

### Description of Reference Characters

- 1: source unit
- 2: operation unit
- 3, 8: additional data generator
- 4, 41: operation control unit
- 5: first output unit
- 6: second output unit
- 7: detector
- 11: game device
- 21: controller
- 21a: hand loudspeaker
- 21b: vibrator
- 21c: display device
- 51: display screen
- 61-67: lighting device
- 361-364: surround loudspeaker
- 365, 366: front loudspeaker
- 367: subwoofer

## Claims

1. An additional data generation system comprising:
a source unit configured to supply an output signal;
an operation control unit configured to obtain output data from the output signal;
a first output unit configured to produce an output based on the output data;
an additional data generator configured to generate additional data which emphasizes a feature of the output from the first output unit;
a second output unit configured to produce an output based on the additional data; and
an operation unit configured to output, to the operation control unit, an operation signal which is used to change the output data.

2. The additional data generation system according to claim 1, wherein
the additional data generator analyzes the output data to generate the additional data.

3. The additional data generation system according to claim 2, wherein
the additional data generator is provided in the operation control unit.

4. The additional data generation system according to claim 1, further comprising:
a detector configured to monitor the output of the first output unit,
wherein the additional data generator generates the additional data based on a result of the detection by the detector.

5. The additional data generation system according to claim 1, wherein
the second output unit includes a plurality of lighting devices provided around a peripheral portion of a region in which the output of the first output unit is viewed.

6. The additional data generation system according to claim 5, wherein
the lighting devices each include at least one of a red light emitting diode cell, a green light emitting diode cell, and a blue light emitting diode cell, and are light emitting diode lighting devices configured to output light beams having different color temperatures.

7. The additional data generation system according to claim 5, wherein
the lighting devices are each at least one of a ceiling light, a pendant light, a bracket light, a downlight, a spotlight, a projector, a hologram, and a laser drawing device.

8. The additional data generation system according to claim 1, wherein
the source unit is a communication terminal device configured to be capable of receiving information distributed via a communication network from a television station, an image distributor, or a music distributor, or a reader configured to read a program and data for performing an operation control of an electronic device from a storage medium storing the program and the data.

9. The additional data generation system according to claim 1, wherein
the additional data generator changes the additional data in conformity with a change in the output data.

10. The additional data generation system according to claim 1, wherein
the operation unit is: a controller or a remote controller for a TV, a VCR, a CD player, a DVD player, a BD player, a PC, a game device, or an amusement device; a sensor or an item for monitoring physical information of an operator; or an operator detection sensor included in a receiver for a wireless emergency alert system.

11. The additional data generation system according to claim 1, wherein
the operation unit outputs, to the operation control unit, the operation signal which is used to change the output data, and the operation control unit changes the output signal based on the operation signal.

12. The additional data generation system according to claim 1, wherein
the operation unit outputs, to the source unit, the operation signal which is used to change the output data, and the source unit changes the output signal based on the operation signal.

13. The additional data generation system according to claim 2, wherein
the output data includes image data, and the additional data is generated based on at least one of a brightness of an image, a color included in the image, and an object included in the image, which are features extracted from the image data.

14. The additional data generation system according to claim 4, wherein
the output data includes image data, the first output unit includes a display screen configured to display an image based on the image data, and the detector includes an image monitoring camera configured to monitor the display screen.

15. The additional data generation system according to claim 14, wherein
the second output unit includes a lighting device provided at an edge portion of the display screen.

16. The additional data generation system according to claim 15, wherein
the second output unit further includes a lighting device provided in the vicinity of the display screen, and the lighting device provided at the edge portion of the display screen and the lighting device provided in the vicinity of the display screen produce an output without discontinuity with respect to an image displayed on the display screen.

17. The additional data generation system according to claim 1, wherein
the additional data includes audio data, and the second output unit includes a surround loudspeaker system configured to produce an output based on the audio data.

18. The additional data generation system according to claim 17, wherein
the surround loudspeaker system includes two surround loudspeakers provided at positions which allow the two surround loudspeakers to face each other with the first output unit being interposed therebetween, two surround loudspeakers provided at positions which allow the two surround loudspeakers to face each other with a region where the output of the first output unit is viewed being interposed therebetween, two front loudspeakers provided in the vicinity of left- and right-hand sides of the first output unit as viewed from the region where the output of the first output unit is viewed, a center loudspeaker provided between the region where the output of the first output unit is viewed and the first output unit, and a subwoofer provided in the vicinity of the first output unit.

19. The additional data generation system according to claim 18, wherein
the second output unit includes four lighting devices along with the surround loudspeakers.

20. The additional data generation system according to claim 5, wherein
at least one of the plurality of lighting devices provided around a peripheral portion of the region where the output of the first output unit is viewed is adjustable in at least one of the intensity and chromaticity of output light.

21. The additional data generation system according to claim 19, wherein
the lighting devices are adjustable in at least one of the intensity and chromaticity of output light.

22. The additional data generation system according to claim 1, wherein
the second output unit includes at least one of a loudspeaker, a vibrator, and a display device provided in the operation unit.

23. The additional data generation system according to claim 1, wherein
the second output unit includes an air conditioner configured to perform air conditioning with respect to the region where the output of the first output unit is viewed.

24. The additional data generation system according to claim 10, wherein
at least a portion of the additional data is changed based on a result of detection by the sensor or item for monitoring the physical information or the operator detection sensor.

25. The additional data generation system according to claim 22, wherein
at least one of the loudspeaker, the vibrator, and the display device also serves as the operation unit.

26. The additional data generation system according to claim 1, wherein
at least a portion of the additional data is changed in synchronization with a change in the output data.
